Europäisches Patentamt

European Patent Office

Office européen des brevets

(11) Veröffentlichungsnummer: **0 217 352
B1**

(12) **EUROPÄISCHE PATENTSCHRIFT**

(45) Veröffentlichungstag der Patentschrift:
02.08.89

(21) Anmeldenummer: **86113416.1**

(22) Anmeldetag: **30.09.86**

(51) Int. Cl.⁴: **G11B 5/706**, C01G 37/027,
H01F 1/11

(54) Verfahren zur Verbesserung von ferromagnetischem Chromdioxid.

(30) Priorität: **04.10.85 DE 3535465**

(43) Veröffentlichungstag der Anmeldung:
**08.04.87 Patentblatt 87/15**

(45) Bekanntmachung des Hinweises auf die Patenterteilung:
**02.08.89 Patentblatt 89/31**

(84) Benannte Vertragsstaaten:
**DE FR GB NL**

(56) Entgegenhaltungen:
**EP-A- 0 027 640**

(73) Patentinhaber: **BASF Aktiengesellschaft,
Carl-Bosch-Strasse 38, D-6700 Ludwigshafen(DE)**

(72) Erfinder: **Steck, Werner, Dr., Auerstrasse 4,
D-6700 Ludwigshafen(DE)**
Erfinder: **Haberkorn, Herbert, Dr., Oberer Bergelweg 5,
D-6718 Gruenstadt(DE)**
Erfinder: **Marosi, Laszlo, Dr., Leuschnerstrasse 32,
D-6700 Ludwigshafen(DE)**
Erfinder: **Huebner, Werner, Hauptstrasse 48c,
D-6710 Frankenthal(DE)**
Erfinder: **Jakusch, Helmut, Dr., Lorscher Ring 6c,
D-6710 Frankenthal(DE)**

**Beschreibung**

Die Erfindung betrifft ein Verfahren zur Verbesserung von ferromagnetischem Chromdioxid hinsichtlich seiner Verarbeitbarkeit bei der Herstellung von magnetischen Aufzeichnungsträgern sowie deren magnetischen und Aufzeichnungs-Eigenschaften.

Die Herstellung von nadelförmigem ferromagnetischem Chromdioxid und die Verwendung dieses Materials für magnetische Aufzeichnungsträger ist vielfach beschrieben. Magnetische Aufzeichnungsträger, die Chromdioxid enthalten, zeigen im allgemeinen gegenüber Aufzeichnungsträgern auf Basis anderer magnetischer Oxide überlegene magnetische Eigenschaften.

Es ist jedoch auch bekannt, daß sich die magnetischen Eigenschaften von nichtstabilisiertem Chromdioxid enthaltenden Aufzeichnungsträgern im Laufe der Zeit verschlechtern. Ferromagnetisches Chromdioxid in Pulverform ist bei Ausschluß von Feuchtigkeit weitgehend stabil, auch ist eine Änderung der magnetischen Eigenschaften über lange Zeit nicht feststellbar. Es wurde aber beobachtet, daß Chromdioxid sowohl von Wasser als auch von anderen Materialien, wie beispielsweise den bei der Herstellung von magnetischen Aufzeichnungsträgern verwendeten organischen Polymerbindemitteln unter Zersetzung zu nichtmagnetischen Bestandteilen angegriffen wird. Bei magnetischen Aufzeichnungsträgern bedeutet dies neben einem Verlust bei den magnetischen und somit elektroakustischen Eigenschaften u.U. auch eine Beeinträchtigung der mechanischen Werte. Diese Verschlechterung wird bei höheren Temperaturen noch beschleunigt. Es hat daher nicht an Versuchen gefehlt, diese Nachteile zu beseitigen. So beschreibt die US-A 3 512 930 die Behandlung von Chromdioxid-Pulver mit einem Reduktionsmittel, während gemäß der DE-A 23 25 132 die Einwirkung von gasförmigen Reduktionsmitteln den Curie-Punkt erhöhen soll. Nach anderen Verfahren werden Aluminiumoxid-Überzüge (US-A 3 687 726) oder solche aus schwerlöslichen Metallphosphaten (US-A 3 686 031) erzeugt. Auch das Aufbringen von Metallverbindungen, deren Kationen zur Bildung schwerlöslicher Chromate befähigt sind, ist bereits bekannt geworden. Die JA-A 21200/76 schlägt zur Umhüllung der Chromdioxid-Teilchen das oberflächliche Aufbringen magnetischer Eisenoxide vor, während gemäß der DE-A 27 49 757 Eisen-(III)-haltige oxidische Niederschläge auf das Chromdioxid aufgebracht werden.

Zur Herstellung hochwertiger magnetischer Aufzeichnungsträger ist es erforderlich, daß das eingesetzte Chromdioxid neben geeigneten magnetischen Werten und einer ausreichenden Klimastabilität auch eine gute Verarbeitbarket aufweist. Hierzu gehören eine leichte Dispergierbarkeit im organischen Medium der Schichtzusammensetzung und das Erzielen einer glatten Magnetschicht-Oberfläche unmittelbar nach dem Auftragen der das Chromdioxid enthaltenden Dispersion auf das Trägermaterial bereits vor einer zusätzlichen Glättung. Eine glatte Schichtoberfläche ist beispielsweise bei Videobändern für einen günstigen Rausch- und Störabstand wichtig. Weitere wichtige Parameter für die Qualität magnetischer Aufzeichnungsträger sind hohe remanente Magnetisierung, hohe Vorzugsrichtung der Magnetisierung (Richtfaktor), geringes Rauschen und hohe Kopierdämpfung.

Es bestand daher die Aufgabe ein Verfahren zur Verbesserung der Anwendungseigenschaften von nadelförmigem ferromagnetischem Chromdioxid bereitzustellen, welches sich dadurch auszeichnet, daß damit magnetische Aufzeichnungsträger wirtschaftlich mit hoher Oberflächenglätte, verbesserter Remanenz und besserem Richtfaktor bei gleichzeitig ausreichend guter Bandklimastabilität hergestellt werden können.

Es wurde nun gefunden, daß sich ein durch Umsetzen von Oxiden des 3-wertigen und 6-wertigen Chroms bei erhöhtem Druck und erhöhter Temperatur in Gegenwart von Wasser und Modifizierungsmittel erhaltenes Chromdioxid aufgabengemäß verbessern läßt, wenn ein derart hergestelltes Chromdioxid bei 210 bis 280°C in einer Inertgasatmosphäre getempert wird, mit der Maßgabe, daß das resultierende Material nur aus den kristallinen Phasen des Chromdioxid und des ortho-rhombischen CrOOH besteht.

Im Rahmen des erfindungsgemäßen Verfahrens hat es sich als zweckmäßig herausgestellt, die Temperung des Chromdioxids in einer Stickstoffatmosphäre bei 210 bis 280°C durchzuführen, wobei eine Behandlungsdauer zwischen 30 Minuten und 6 Stunden ausreichend ist.

Das für das erfindungsgemäße Verfahren eingesetzte Chromdioxid wird nach bekannten und allgemein üblichen Verfahren hergestellt, wie beispielsweise in der EP-B 27 640 beschrieben. Es kann gegebenenfalls zweckmäßig sein, dieses Chromdioxidmaterial vor dem erfindungsgemäßen Temperprozeß einer mechanischen Behandlung zu unterwerfen, wie z.B. einer Trocken- oder Naßmahlung oder es auch mechanisch zu verdichten oder bereits vorzudispergieren. In einer bevorzugten Ausführungsform wird das Chromdioxid vor dem Tempern in wäßriger und/oder organischer Suspension mit Reduktionsmitteln behandelt und anschließend filtriert, gewaschen und gegebenenfalls getrocknet. In gleich vorteilhafter Weise läßt sich ein Chromdioxidmaterial einsetzen, das beispielsweise durch eine Reaktion mit Wasser entweder im Rahmen des üblichen Herstellungsprozesses oder durch eine gesonderte Nachbehandlung bereits zumindest teilweise auf seiner Oberfläche ortho-rhombisches CrOOH aufweist.

Zur Durchführung des erfindungsgemäßen Verfahrens wird nun das wie beschrieben hergestellte und gegebenenfalls behandelte Chromdioxid in einer Inertgasatmosphäre, wie beispielsweise in einem Stickstoff- und/oder Edelgasstrom, bei 210 bis 280°C getempert. Dies geschieht in einem Ofen üblicher Bauart, wie beispielsweise in einem Drehrohr-, Festbett- oder Wirbelbettofen, in kontinuierlicher oder diskontinuierlicher Weise. Je nach eingestellter Tempertemperatur sind hierfür Zeiten zwischen 30 Minuten und 6 Stunden ausreichend.

Das so behandelte Chromdioxid zeigt im Röntgenbeugungsspektrum zwei kristalline Phasen, die des Chromdioxids und die des ortho-rhombischen CrOOH. Die durch die Analyse der Röntgenbeugungsspektren gefundenen Peaklagen entsprechen den Netzebenenabständen des $CrO_2$ (110) mit 3,128 ± 0,005 Å und des ortho-rhombischen CrOOH (110) mit 3,220 ± 0,005 Å. Weitere, entweder definierten oder nicht definierten oxidischen Chromverbindungen zuzuordnenden Röntgenbeugungslinien sind nicht nachweisbar.

Mit dem erfindungsgemäßen Verfahren ist ein Chromdioxidmaterial erhältlich, dessen Teilchenaufbau aus einem $CrO_2$-Kern und einer ortho-rhombischen CrOOH-Hülle die gestellte Aufgabe der gleichzeitigen Verbesserung von wichtigen anwendungstechnischen Parametern bei ausreichend guter Klimastabilität erfüllt. Der Nachweis dieses Kern/Hülle-Teilchenmodells kann z.B. mit der bekannten Technik der Sekundärionen-Massenspektroskopie (SIMS) durch Aufnahme von Tiefenprofilen geführt werden. Diese Meßmethode ist u.a. in "Ullmann's Encyklopädie der technischen Chemie", 4. Auflage, Band 5, Seiten 519 bis 576 beschrieben.

Die vorteilhaften Eigenschaften der gemäß der Erfindung hergestellten Chromdioxide werden bei der Verwendung als magnetisches Material zur Herstellung von magnetischen Aufzeichnungsträgern deutlich. Die Verarbeitung erfolgt nach bekannten Methoden. Für die Herstellung der Magnetschicht werden 2 bisw 5 Gew.-Teile Chromdioxid mit einem Teil des Bindemittels bzw. -gemisches sowie den geeigneten Dispergierhilfsmitteln, Gleitmitteln und weiteren üblichen Zusatzstoffen in einer Gesamtmenge bis zu 10 Gew.% des Chromdioxids zu einer Dispersion verarbeitet. Die so erhaltene Dispersion wird filtriert und mit einer üblichen Beschichtungsmaschine, z.B. mittels eines Linealgießers, auf den unmagnetischen Träger in einer oder mehreren dünnen Schichten oder auf einen mit einer anderen Magnetschicht bereits versehenen Magnetogrammträger in dünner Schicht aufgetragen. Vor Trocknung der flüssigen Beschichtungsmischung bei Temperaturen zwischen 50 und 90°C wird gegebenenfalls eine magnetische Ausrichtung der Chromdioxidteilchen vorgenommen. Für eine spezielle Oberflächenvergütung der Magnetschicht werden die beschichteten Folienbahnen zwischen geheizten polierten Walzen unter Druck hindurchgeführt. Danach betragen die Dicken der Magnetschichten üblicherweise zwischen 1,5 und 12 μm.

Als Bindemittel für die Magnetschichten können die bekannten Polymerbindemittel verwendet werden, wie Vinylchlorid-Copolymere, Acrylat-Copolymere, Polyvinylacetale, wie Polyvinylformal oder Polyvinylbutyral, höhermolekulare Epoxidharze, Polyurethane und Gemische dieser und ähnlicher Bindemittel. Als vorteilhaft haben sich die in einem flüchtigen organischen Lösungsmittel löslichen elastomeren und praktisch isocyanatgruppenfreien linearen Polyesterurethane erwiesen, wie sie durch Umsetzung eines Polyesters aus einer aliphatischen Dicarbonsäure mit 4 bis 6 C-Atomen, wie Adipinsäure, und mindestens einem aliphatischen Diol mit 3 bis 10 C-Atomen, wie 1,2- oder 1,3-Propylenglykol, 1,4-Butandiol, Diethylenglykol, Neopentylglykol oder 1,8-Octandiol, mit einem Diisocyanat mit 6 bis 24 und insbesondere 8 bis 20 C-Atomen, wie Toluylendiisocyanat oder 4,4'-Diisocyanatodiphenylmethan, bevorzugt in Gegenwart einer kleineren Menge eines Glykols mit 4 bis 10 C-Atomen, wie 1,4-Butandiol, das eine Kettenverlängerung bewirkt, hergestellt werden können. Bevorzugt sind solche Polyesterurethane aus Adipinsäure, 1,4-Butandiol und 4,4'- Diisocyanatodiphenylmethan. Bevorzugte Polyesterurethane haben eine Shore-Härte A von 70 bis 100, eine Festigkeit von 400 bis 420 kp/cm² und eine Dehnung von etwa 440 bis 560 %. Gut bewährt haben sich auch Polymerbindemittel auf der Basis eines Copolymerisates aus 70 bis 95 und insbesondere 75 bis 90 Gew.% Vinylchlorid und 5 bis 30 und insbesondere 10 bis 25 Gew.% eines Alkylesters einer olefinisch ungesättigten Carbonsäure mit 3 bis 5 C-Atomen, wie Acrylsäure, Methacrylsäure oder Maleinsäure, und bevorzugt mit 1 bis 3 C-Atomen im Alkylrest. Hervorzuheben sind hierbei die entsprechenden Vinylchlorid-Copolymerisate mit mindestens einem $C_1$- bis $C_3$-Dialkylmaleinat, wie Copolymerisate aus 70 bis 90 Gew.% Vinylchlorid, 5 bis 15 Gew.% Dimethylmaleinat und 5 bis 15 Gew.% Diethylmaleinat. Der K-Wert nach H. Fikentscher liegt für die besonders geeigneten Polymerbindemittel zwischen 40 und 60.

Die unter Verwendung der erfindungsgemäß hergestellten Chromdioxide gefertigten magnetischen Aufzeichnungsträger weisen gegenüber den bekannten Chromdioxid enthaltenden Aufzeichnungsträgern eine verbesserte Empfindlichkeit und auch Aussteuerbarkeit sowohl in den Höhen als auch in den Tiefen bei einer ausreichend guten Klimastabilität auf.

Anhand der folgenden Beispiele wird das erfindungsgemäße Verfahren näher erläutert und mit Vergleichsversuchen zum Stand der Technik in Beziehung gesetzt. Die magnetischen Werte der Pulverproben wurden mit einem Schwingmagnetometer bei einem magnetischen Feld von 160 kA/m oder nach Vormagnetisierung im Impulsmagnetisierer in einem Schwingmagnetometer gemessen. Die Werte der Koerzitivfeldstärke, $H_c$, gemessen in [kA/m], wurden bei den Pulvermessungen auf eine Stopfdichte von $\rho$ = 1,3 g/cm³ bezogen. Spezifische Remanenz ($M_r/\rho$) und Sättigung ($M_m/\rho$) sind jeweils in [nTm³/g] angegeben. Die spezifische Oberfläche $S_{N_2}$ der Pigmente wird nach BET in m²/g bestimmt, d.h. an gewogenen evakuierten, gasfreien Pigmentproben wird Stickstoff adsorbiert. Die Differenzmenge Stickstoff vor und nach Adsorption wird in belegte Fläche umgerechnet und ins Verhältnis zur Einwaage gesetzt.

An den magnetischen Aufzeichnungsträgern wurde die Oberflächenglätte der Magnetschicht sowohl durch eine Glanzmessung mit einem handelsüblichen Reflektometer bei einem Strahlungswinkel von 85° und von 20° erfaßt (siehe u.a. W. Lehmann "Farb- und Glanzmeßgeräte", Kontrolle, Juli 1984, Seiten 64 bis 66) als auch durch die Messung der mittleren Rauhtiefe $R_z$ nach DIN 4768. Die Klimastabilität wurde bei 65°C und 95 % relativer Feuchte bestimmt und zwar wird hierzu unter diesen Bedingungen ein magnetischer Aufzeichnungsträger im Klimaschrank 14 Tage gelagert und anschließend die remanente Magnetisierung bei Raumtemperatur gemessen. Angegeben wird der nach der Klimabeanspruchung gemessene $M_r$-Wert ($M_r(t)$) im Verhältnis zum Ausgangswert ($M_r(o)$). Die Bestimmung der magnetischen Eigenschaften erfolgt mittels eines Schwingmagnetometers bei einem Meßfeld von 160 kA/m. Dabei wird die Koerzitivstärke $H_c$ in [kA/m], die remanente Magnetisierung $M_r$ und die Sättigungsmagnetisierung $M_s$ in [mT] gemessen, sowie der Ausrichtfaktor Rf als der Quotient aus der Remanenz längs der magnetischen Vorzugsrichtung zu derjenigen in Querrichtung errechnet. Die elektromagnetischen Eigenschaften der magnetischen Aufzeichnungsträger wurden nach DIN 45 512, Blatt II, bezogen auf das IEC II-Bezugsband, bestimmt.

Beispiel 1

Ein gemäß Beispiel 1 der EP-B 27 640 hergestelltes Chromdioxid wurde bei 120°C an Luft getrocknet (Probe 1). Dann wurde das Material im Verhältnis 1:10 in einer 13 %igen Lösung von Natriumsulfit in Wasser suspendiert und nach 30 Minuten bei Raumtemperatur abfiltriert, mit Wasser gewaschen und sprühgetrocknet (Probe 2).

Nun wurden jeweils 20 Teile der Probe 2, die einen BET-Wert von 26 m²/g aufwies, in einem Drehrohrofen im Stickstoffstrom bei den in der Tabelle 1 angegebenen Temperaturen getempert (Proben 3-7). Zum Vergleich wurde außerdem eine Probe im Luftstrom getempert (Probe 8). Die Meßergebnisse sind in Tabelle 1 angegeben.

Tabelle 1

| Probe Nr. | Temperung bei/in | $H_c$ | $M_r$ | $M_s$ | Röntgenanalyse | | |
|---|---|---|---|---|---|---|---|
| | | | | | $CrO_2$ (110) | CrOOH (110) | zusätzl. Linie |
| 1 | | 40 | 48 | 89 | + | gering | — |
| 2 | | 41 | 41 | 76 | + | + | + |
| 3 | 120°C/N₂ | 42 | 42 | 77 | + | + | ++ |
| 4 | 160°C/N₂ | 42 | 44 | 81 | + | + | ++ |
| 5 | 210°C/N₂ | 41 | 44 | 81 | + | + | — |
| 6 | 280°C/N₂ | 39 | 44 | 81 | + | + | — |
| 7 | 340°C/N₂ | 34 | 40 | 75 | + | gering | — |
| 8 | 280°C/Luft | 39 | 50 | 91 | + | — | — |

Beispiel 2

Ein gemäß Beispiel 1 der EP-B 27 640 jedoch mit Dotierung von 1,3 Gew.% Eisenoxid hergestelltes Chromdioxid wurde bei 120°C unter Stickstoff getrocknet (Probe 9). Danach wurde es in einem Rührgefäß bei 90°C in einer wäßrigen Suspension in Gegenwart von 10 Gew.% Natriumsulfit 2 Stunden lang behandelt, anschließend filtriert, mit Wasser gewaschen und innerhalb von 15 Stunden im Wasserstrahlvakuum getrocknet (Probe 10).

Nun wurden jeweils 100 Teile der Probe 10, die einen BET-Wert von 30 m²/g aufwies, in einem Drehrohrofen im Stickstoffstrom bei der in Tabelle 2 angegebenen Temperatur und Zeitdauer getempert (Proben 11 bis 14). Die Meßergebnisse sind in Tabelle 2 angegeben.

Tabelle 2

| Probe Nr. | Temperung | $H_c$ | $M_r$ | $M_s$ | Röntgenanalyse | | |
|---|---|---|---|---|---|---|---|
| | | | | | $CrO_2$ (110) | CrOOH (110) | zusätzl. Linie |
| 9 | | 50 | 48 | 83 | + | + | − |
| 10 | | 51 | 41 | 71 | + | + | + |
| 11 | 280°C/180 min | 47 | 39 | 71 | + | + | − |
| 12 | 240°C/180 min | 49 | 43 | 77 | + | + | − |
| 13 | 210°C/180 min | 49 | 44 | 77 | + | + | − |
| 14 | 280°C/60 min | 48 | 41 | 72 | + | + | − |

Beispiel 3

In einer 250 Volumenteile fassenden und mit 100 Volumenteilen Stahlkugeln mit einem Durchmesser von 1,5 mm gefüllten Mühle wurden jeweils 40 Teile der in Tabelle 3 angegebenen Chromdioxidproben mit 175 Teilen einer 13 %igen Lösung eines thermoplastischen Polyesterurethans aus Adipinsäure, 1,4-Butandiol, 4,4'-Diisocyanatodiphenylmethan in einem Gemisch aus gleichen Teilen Tetrahydrofuran und Dioxan, 150 Teile einer 13 %igen Lösung eines handelsüblichen Polyvinylformals in einer Mischung aus gleichen Teilen Tetrahydrofuran und Dioxan, 24 Teile eines Lösungsmittelgemisches aus gleichen Teilen Tetrahydrofuran und Dioxan und 1 Teil Zinkoleat gemischt und 4 Stunden dispergiert. Danach wurden nochmal die gleichen Mengen der beiden Bindemittellösungen, 13,5 Teile des genannten Lösungsmittelgemisches sowie 0,1 Teile eines handelsüblichen Silikonöls zugefügt und weitere 30 Minuten dispergiert. Anschließend wurde die Dispersion filtriert und auf einer üblichen Beschichtungsmaschine mittels eines Linealgießers und einer solchen Dicke auf eine 10 μm dicke Polyethylenterephthalatfolie aufgebracht, daß sich nach dem Trocknen und Kalandrieren eine Trockenschichtdicke von 5,5 μm ergab. Unmittelbar nach dem Aufgießen der flüssigen Dispersion wurden die nadelförmigen Chromdioxidteichen durch ein Magnetfeld längs der Aufzeichnungsrichtung orientiert. An der Oberfläche der Magnetschicht wurde die mittlere Rauhigkeit $R_z$ und der Glanzwert sowohl vor dem Kalandrieren als auch nach dem Kalandrieren bestimmt.

Die Meßergebnisse sind in Tabelle 3 angegeben.

Tabelle 3

| | CrO$_2$-Probe Nr. | | | | |
|---|---|---|---|---|---|
| | 10 | 11 | 12 | 13 | 14 |
| $H_c$ | 50 | 47 | 49 | 49 | 48 |
| $M_r$ | 148 | 157 | 159 | 161 | 159 |
| $R_f$ | 2,6 | 2,9 | 3,1 | 3,0 | 3,0 |
| Glanz unkal. 85° | 88 | 97 | 97 | 95 | 95 |
| Glanz kal. 20° | 106 | 216 | 220 | 216 | 200 |
| $R_z$ unkal. | 1,07 | 0,48 | 0,45 | 0,46 | 0,46 |
| Tiefenempfindlichkeit $E_T$ | −1,3 | 0 | −0,5 | −0,5 | −0,5 |
| Höhenempfindlichkeit $E_H$ | +2,4 | +3,7 | +4,0 | +4,0 | +4,0 |
| Tiefenaussteuerbarkeit $A_T$ | −1,7 | +0,5 | −0,5 | −0,5 | −0,5 |
| Höhenaussteuerbarkeit $A_H$ | +3,0 | +3,5 | +5,2 | +5,2 | +5,0 |

Patentansprüche

1. Verfahren zur Verbesserung von ferromagnetischem Chromdioxid, das durch Umsetzen von Oxiden des 3-wertigen und 6-wertigen Chroms bei erhöhtem Druck und erhöhter Temperatur in Gegenwart von Wasser und Modifizierungsmittel erhalten wird, dadurch gekennzeichnet, daß das so hergestellte Chromdioxid anschließend bei 210 bis 280°C in einer Inertgasatmosphäre getempert wird, mit der Maßgabe, daß das resultierende Material nur aus den kristallinen Phasen des Chromdioxid und des ortho-rhombischen CrOOH besteht.

2. Verfahren gemäß Anspruch 1, dadurch gekennzeichnet, daß die Temperbehandlung während 30 Minuten bis zu 6 Stunden in einer Stickstoffatmosphäre durchgeführt wird.

## EP 0 217 352 B1

3. Verwendung der nach dem Verfahren gemäß Anspruch 1 oder 2 hergestellten Chromdioxide zur Herstellung von magnetischen Aufzeichnungsträgern.

### Claims

1. A process for improving ferromagnetic chromium dioxide obtained by converting oxides of 3-valent and 6-valent chromium under superatmospheric pressure and at elevated temperatures in the presence of water and a modifier, wherein the chromium dioxide thus prepared is then heated at from 210 to 280°C in an inert gas atmosphere, with the proviso that the resulting material consists only of the crystalline phases of chromium dioxide and of orthorhombic CrOOH.

2. A process as claimed in claim 1, wherein the heat treatment is carried out for from 30 minutes to 6 hours in a nitrogen atmosphere.

3. Use of the chromium dioxide prepared by the process as claimed in claim 1 or 2 for the preparation of magnetic recording media.

### Revendications

1. Procédé pour l'amélioration de bioxyde de chrome ferromagnétique, qui est obtenu par réaction d'oxydes de chrome trivalent et hexavalent, à pression élevée et température élevée, en présence d'eau et d'agent de modification, caractérisé par le fait qu'on recuit en atmosphère inerte, entre 210 et 280°C, le bioxyde de chrome ainsi obtenu, sous réserve que le matériau résultant ne soit constitué que des phases cristallines du bioxyde de chrome et de CrOOH ortho-rhombique.

2. Procédé selon la revendication 1, caractérisé par le fait que le traitement de recuit est effectué en atmosphère d'azote pendant 30 minutes à jusqu'à 6 heures.

3. Utilisation des bioxydes de chrome préparés par le procédé selon la revendication 1 ou 2 pour la fabrication de supports d'enregistrement magnétiques.